Europäisches Patentamt

(19) European Patent Office

Office européen des brevets

(11) Publication number: **0 003 870**

**B2**

(12) NEW EUROPEAN PATENT SPECIFICATION

(45) Date of publication of the new patent specification: **22.04.87**

(21) Application number: **79300136.3**

(22) Date of filing: **29.01.79**

(51) Int. Cl.⁴: **C 09 D 5/02,** C 09 D 3/74, C 09 D 3/80, C 09 D 7/12

(54) Aqueous polymer resin emulsions and water-based paints and coatings containing such emulsions.

(30) Priority: **31.01.78 US 873813**

(43) Date of publication of application: **05.09.79 Bulletin 79/18**

(45) Mention of the opposition decision: **14.10.81 Bulletin 81/41**

(45) Publication of the grant of the patent: **22.04.87 Bulletin 87/17**

(84) Designated Contracting States: **BE DE FR GB IT NL SE**

(56) References cited:
BE-A- 856 911
FR-A-2 261 940
US-A- 873 813
US-A-3 736 166
US-A-3 954 687
US-A-4 035 329
US-A-4 044 197
US-A-4 073 779

**Encyclopedia of Polymer Science and Technology (1964), vol. 1, p. 757**

**Houben-Weyl: Methoden der organischen Chemie (1961), Bd. XIV/!, p. 1133**

(73) Proprietor: **AIR PRODUCTS AND CHEMICALS, INC.**
**P.O. Box 538**
**Allentown, Pennsylvania 18105 (US)**

(72) Inventor: **Herman, Frederick Louis**
**1229 North Ott Street**
**Allentown Pennsylvania 18104 (US)**
Inventor: **Dixon, Dale David**
**Box 53D RD 2**
**Kutztown Pennsylvania 19530 (US)**

(74) Representative: **Sandmair, Kurt, Dr. et al**
**Patentanwälte Schwabe, Sandmair, Marx**
**Stuntzstrasse 16**
**D-8000 München 80 (DE)**

(56) References cited:
**Ullmann's Encyklopädie der technischen Chemie (1963), Bd. 14, pp. 114-116**

**B. Vollmert, Polymer Chemistry (1973), pages 51-52**

## Description

This invention relates to aqueous polymer resin emulsions for use in water-based paints and coatings and more particularly is concerned with such aqueous polymer resin emulsions which incorporate additives to impart improved wet-adhesion properties to the water-based paints and coatings based thereon.

It is well known that the wet adhesion properties of water-based paints and coatings based on aqueous polymer resin emulsions can be improved by incorporating into the polymer resin emulsions additives such as allyl carbamate, N-carbamyl maleamic acid, 3 buteneamide, N-carboallyl urea, N-carboallyloxy ethylene urea and N-(allyloxyacetyl) ethylene urea.

We have now discovered that allyl urea and/or methallyl urea are particularly suitable additives in so far as they are readily commercially available, relatively inexpensive and surprisingly effective.

According to the present invention there is provided an aqueous polymer resin emulsion that when used in water-based paints and coatings imparts improved wet adhesion properties to the eventual dried paint or coating, characterized in that it comprises polymer resin formed by the polymerization of a mixture which incorporates allyl urea and/or methallyl urea.

Preferably, said mixture incorporates a monomer selected from the group consisting of vinyl esters; acrylate and methacrylate esters; vinyl acetate in admixture with at least one polymerizable monomer from the group consisting of ethylene, vinyl chloride, alkyl esters of acrylic acid, alkyl esters of methacrylic acid and maleic acid; vinyl acetate and butyl acrylate and mixtures thereof.

The present invention also provides a water-based paint or coating comprising an aqueous polymer resin emulsion according to the invention.

In order to determine the effectiveness of allyl urea in improving wet adhesion properties various tests were carried out. The results of these tests were then compared with similar tests using known additives in place of allyl urea.

Each test mixture was prepared as follows:

Firstly a seed emulsion was prepared by mixing in a reaction vessel:

|  | parts by weight |
|---|---|
| FLEXBOND (Trademark) 325 (55% solids) | 91 |
| Natrosal 25.0 LR (hydroxy-ethyl cellulose) | 0.89 |
| Fe$^{++}$ | Trace |
| Deionized water | 539 |

The reactants were agitated at 200 RPM and heated to 65°C while purging with nitrogen. Simultaneously, the following mixtures were delayed to the seed emulsion over a 2 hour period:

2

| Mixture 1 | parts by weight |
|---|---|
| Vinyl acetate | 868 |
| n-Butyl acrylate | 97 |
| Igepal CO 887 | 15 |
| Igepal CO 630 | 10.5 |
| Pluronic F 68 | 15.5 |
| Pluronic L 64 | 15.5 |
| t-Butyl hydroperoxide (70%) | 1.4 |

Followed by a solution composed of:

| Mixture 2 | |
|---|---|
| Additive under test | 0.75% by weight of monomers |
| Deionized water | 200 parts |

The polymerization temperature was maintained at 65°C using an activator solution consisting of:

| Mixture 3 | parts by weight |
|---|---|
| Discolite PEA | 0.4 |
| Sodium benzoate | 1.1 |
| Deionized water | 16.4 |

The vinyl acetate free monomer content was kept between 3 and 5% throughout the polymerization with a jacket temperature between 53 and 65°C. At the end of the delays, and when the vinyl acetate-free monomer content was below 0.5%, the emulsion was cooled. The final pH was 5.1 and the solids content was 55.6%. The emulsion was then worked up into a standard semi-gloss water-based paint formulation.

Each water-based paint was then subjected to:

1. The cut film test; and
2. The floating board test.

Details of the cut film test for testing wet adhesion to a surface of semi-gloss paint are set out in United States Federal Specification TT—P—001511, paragraph 4.3.9 (GSA—FSS). In this test a panel is painted with an alkyd enamel of specified composition and permitted to dry under specified conditions. The test paint is then applied over the alkyd surface and dried. A cut is then made longitudinally through the centre of the test film and the panel scrubbed under water at a specified rate of brush travel. To pass this part of the test, there must be no loss of adhesion between the test paint and the alkyd undercoat and no wearing through to the undercoat in fewer than 5,000 cycles. A second cut is then made perpendicular to the first on the test film and the board is subject to an additional 1000 cycles of under water brushing. To pass this part of the test there must be no loss of adhesion between the test paint and the alkyd undercoat.

In the "floating board" test, the composition to be tested is applied over a dry gloss alkyd-painted plane board surface and dried. A one-inch section of the surface is scored by cross-hatching with parallel cuts vertical and horizontal 1/10—1/8 inch apart. An adhesive tape is applied to the dry scored surface and the relative amounts of the surface film peeled off by the adhesive observed. The board is again similarly scored and then floated face down on a water bath to wet the scored surface and the adhesive tape procedure repeated, again observing the amount of painted surface removed.

Details of the tests are shown in Tables 1 and 2.

TABLE 1

| Additive | Cut Film Test | |
| --- | --- | --- |
| | 1st Cut<br>5000 cycles | Recut<br>1000 cycles |
| N-allyl urea | Pass | Pass |
| Allyl Carbamate | Fails after 250 | *Fails at 340 |
| B-Allyloxy prop-<br>ionamide | Fails at 100 | *Fails at 239 |
| N-carbamyl male-<br>amic acid | Fail | — |
| 3-butenamide | Fail | — |
| N-carboalloxy<br>urea | Fail | — |
| N-carboallyloxy<br>ethylene urea | Fail | — |
| N-(allyloxyacetyl)<br>ethylene urea | Fail | — |
| Control (no<br>additive) | Completely<br>stripped | *Fails at<br>100 cycles |

*Test carried out on new panel

TABLE 2

| Test compound | Floating Board Test | |
| --- | --- | --- |
| | % Removal<br>wet | % Removal<br>dry |
| N-allyl urea | 0 | 0 |
| Allyl carbamate | 26 | 4 |
| B-Allyloxy propion-<br>amide | 98 | 0 |
| N-carbamyl maleamic<br>acid | 82 | 1 |
| 3-buteneamide | 5 | 1 |
| Control (no additive) | 100 | 80 |

Similar tests indicated that methallyl urea was about as efficient as allyl urea.

FLEXBOND 325: A copolymer emulsion prepared from 86 parts vinyl acetate and 14 parts butyl acrylate stabilized with hydroxyethyl cellulose.

4

**0 003 870**

Igepal CO 887: Nonyl phenoxypoly (ethyleneoxy) ethanol comprising 86% ethylene oxide.

Igepal CO 630: Nonyl phenoxypoly (ethyleneoxy) ethanol comprising 65% ethylene oxide.

Pluronic F 68)
Pluronic L 64): Non-ionic block polymers comprising polyalkylene derivatives of propylene glycol terminating in hydroxyl.

Discolite: Sodium formaldehyde sulfoxylate.

## Claims

1. An aqueous polymer resin emulsion that when used in water-based paints and coatings imparts improved wet adhesion properties to the eventual dried paint or coating, characterized in that it comprises polymer resin formed by the polymerization of a mixture which incorporates allyl urea and/or methallyl urea.

2. An aqueous polymer resin emulsion according to Claim 1, characterized in that said mixture incorporates a monomer selected from the group consisting of vinyl esters; acrylate and methacrylate esters; vinyl acetate in admixture with at least one polymerizable monomer from the group consisting of ethylene, vinyl chloride, alkyl esters of acrylic acid, alkyl esters of methacrylic acid, and maleic acid; vinyl acetate and butyl acrylate and mixtures thereof.

3. A water-based paint or coating characterized in that it comprises an aqueous polymer resin emulsion according to Claim 1 or 2.

## Patentansprüche

1. Wäßrige Polymerharzemulsion, die, wenn sie in Farben oder Überzügen auf wäßriger Basis verwendet wird, den getrockneten Farben oder Überzügen verbesserte Naßhaftungseigenschaften verleiht, dadurch gekennzeichnet, daß sie ein Polymerharz enthält, das durch Polymerisation eines Gemisches gebildet wird, das Allylharnstoff und/oder Methallylharnstoff enthält.

2. Wässrige Polymerharzlösung nach Anspruch 1, dadurch gekennzeichnet, daß das Gemisch ein Monomeres enthält, das aus einer Gruppe ausgewählt ist, die aus Vinylestern; Acrylat- und Methacrylatestern; Vinylacetat, vermischt mit wenigstens einem polymerisierbaren Monomeren aus einer Gruppe, die aus Äthylen, Vinylchlorid, Alkylestern der Acrylsäure, Alkylestern der Methacrylsäure und Maleinsäure besteht; Vinylacetat und Butylacrylat sowie Gemischen davon besteht.

3. Farbe oder Überzug auf wässriger Basis, dadurch gekennzeichnet, daß sie bzw. er eine wässrige Polymerharzlösung nach Anspruch 1 oder 2 umfaßt.

## Revendications

1. Emulsion aqueuse de résine polymère qui lorsqu'elle est utilisée dans des peintures et enduits à base d'eau confère à la peinture ou à l'enduit éventuel appliqué en quantité dosée des propriétés améliorées d'adhésion à l'état humide, caractérisée en ce qu'elle comprend de la résine polymère formée par polymérisation d'un mélange qui comprend de l'allyl-urée et/ou de la méthallylurée.

2. Emulsion aqueuse de résine polymère selon la revendication 1, caractérisée en ce que ledit mélange comprend un monomère choisi dans le groupe constitué par les esters vinyliques; les acrylates et méthacrylates (esters); l'acétate de vinyle en mélange avec au moins un monomère polymérisable du groupe constitué par l'éthylène, le chlorure de vinyle, les esters alcoyliques de l'acide acrylique, les esters alcoyliques de l'acide méthacrylique, et l'acide maléique; l'acétate de vinyle et l'acrylate de butyle et leurs mélanges.

3. Peinture ou enduit à base d'eau, caractérisé en ce qu'elle ou il comprend une émulsion aqueuse de résine polymère selon la revendication 1 ou 2.